# EUROPÄISCHE PATENTSCHRIFT

(11) **EP 1 843 436 B1**
(45) Veröffentlichungstag und Bekanntmachung des Hinweises auf die Patenterteilung: **12.04.2017**
(21) Anmeldenummer: 07102049.9
(22) Anmeldetag: 09.02.2007
(51) Int. Cl.: H01R 13/627, H01M 2/10

(54) **Elektrische Kopplungsanordnung**
Electrical coupling assembly
Agencement d'accouplement électrique

(30) Priorität: 07.04.2006 DE 102006018001
(43) Veröffentlichungstag der Anmeldung: 10.10.2007
(73) Patentinhaber: ROBERT BOSCH GMBH, 70442 Stuttgart (DE)
(72) Erfinder: Raff, Thomas, 72135, Dettenhausen (DE); Rejman, Marcin, 71332, Waiblingen (DE); Hirt, Daniel, 72138, Kirchentellinsfurt (DE); Baumgartner, Josef, 70374, Stuttgart (DE)

(56) Entgegenhaltungen:
- DE-A1- 10 212 750
- JP-A- 2006 050 789
- US-A1- 2005 218 868
- US-B1- 6 350 149

## Beschreibung

### Stand der Technik

Die Erfindung betrifft eine Anordnung zur elektrischen Kopplung einer Ladeeinrichtung mit einer elektrischen Versorgungseinheit nach dem Oberbegriff des Anspruchs 1.

Seit einigen Jahren finden kabellose Elektrogeräte, insbesondere Handwerkzeugmaschinen, mit einer netzunabhängigen Spannungsversorgung für den Elektromotor breite Anwendung, da die Unabhängigkeit vom Spannungsnetz viele Vorteile für die Handhabung solcher Handwerkzeugmaschinen hat. Die Akkus zur Spannungsversorgung sind entweder in der Handwerkzeugmaschine integriert oder als Akkupack an dem Gehäuse der Handwerkzeugmaschine angebracht. Zum Laden der Akkus wird die Handwerkzeugmaschine bzw. der Akkupack mit einem Ladegerät gekoppelt. Es ist aus dem Stand der Technik bekannt, dass der Akkupack zum Laden der Akkus vom Elektrogerät getrennt wird oder mit dem Elektrogerät verbunden bleibt. Sind die Akkus fest in das Elektrogerät integriert kann das Elektrogerät auf das Ladegerät gestellt oder gelegt werden, wo es durch die Schwerkraft gehalten wird.

Aus DE 102 12 750 A ist beispielsweise eine Handwerkzeugmaschine, wie z.B. eine Bohrmaschine oder ein Bohrschrauber, bekannt, an deren Gehäuse ein Akkupack-System anbringbar ist. Zum einen sind für die mechanische Verbindung des Gehäuses mit dem Akkupack-System Rastelemente vorgesehen, zum anderen sind für die elektrische Verbindung Kontaktelemente vorhanden. Der Akkupack kann beispielsweise am Fuß des Handgriffs der Handwerkzeugmaschine angebracht sein, wobei wenigstens eine Seitenfläche des Akkupacks als Standfläche ausgebildet ist, so dass die mit dem Akkupack-System bestückte Handwerkzeugmaschine auf einer ebenen Fläche abstellbar ist.

Bekannte akkubetriebene Elektrogeräte, insbesondere Handwerkzeugmaschinen, haben den Nachteil, dass der Ladevorgang des Akkus unter Umständen auch dann ablaufen kann, wenn der Akku bzw. das Elektrogerät nicht vollständig in der Ladeeinrichtung eingerastet ist. Dabei kann der Ladevorgang unter Umständen unkontrolliert ablaufen, so dass z.B. nicht sichergestellt ist, dass nach einer bestimmten Verweilzeit des Elektrogerätes in der Ladeeinrichtung der Ladezustand des Akkus wieder voll hergestellt ist.

JP 2006 050789 A offenbart eine Anordnung zur elektrischen Kopplung einer elektrischen Versorgungseinheit mit einer Ladeeinrichtung, wobei die elektrische Versorgungseinheit sowie die Ladeeinrichtung jeweils mindestens ein erstes und zweites Kontaktelement aufweisen. Die ersten und zweiten Kontaktelemente der Ladeeinrichtung werden mittels einer geeignet gewählten Vorspannung eines Federelements in Richtung außerhalb der Oberseite der Ladeeinrichtung gedrückt, um einen verlässlichen elektrischen Kontakt zwischen den ersten und zweiten Kontaktelementen und somit einen Beginn eines Ladevorgangs der Versorgungseinheit sicherzustellen.

### Offenbarung der Erfindung

Die erfindungsgemäße Anordnung zur elektrischen Kopplung einer Versorgungseinheit und einer Ladeeinrichtung ist so ausgeführt, dass das mindestens erste und zweite Kontaktelement der elektrischen Versorgungseinheit mit dem mindestens ersten und zweiten Kontaktelement der Ladeeinrichtung derart zusammenwirken, dass der Ladevorgang nur in einer definierten Endposition der elektrischen Versorgungseinheit in der Ladeeinrichtung erfolgt. Dies hat den Vorteil, dass in keiner anderen Lage der Versorgungseinrichtung in der Ladeeinrichtung der Ladevorgang ablaufen kann und so der Ladevorgang nur in kontrollierter Weise vonstatten geht. Wird die Versorgungseinrichtung unsachgemäß in die Ladeeinrichtung eingebracht, wird der Ladevorgang nicht ausgeführt.

Unter einer definierten Endstellung der elektrischen Versorgungseinrichtung in der Ladeeinrichtung wird im Rahmen der vorliegenden Erfindung diejenige Position verstanden, in der die Versorgungseinheit in der vorgesehenen Weise in der Ladeeinrichtung formschlüssig und/oder kraftschlüssig aufgenommen und mit der Ladeeinrichtung lösbar, aber lagesicher verbunden ist. In der Endstellung ist die Versorgungseinheit lagesicher, insbesondere mit geringem Spiel, in der Ladeeinrichtung angeordnet. In der Endstellung kontaktieren das erste Kontaktelement der Ladeeinrichtung und das erste Kontaktelement der Versorgungseinheit sowie das zweite Kontaktelement der Ladeeinrichtung und das zweite Kontaktelement der Versorgungseinheit einander, d.h. die Ladeeinrichtung und die Versorgungseinrichtung befinden sich im elektrisch gekoppelten Zustand und insbesondere zusätzlich auch im mechanisch gekoppelten Zustand.

Insbesondere kontaktieren das erste und zweite Kontaktelement der elektrischen Versorgungseinrichtung das erste und zweite Kontaktelement der Ladeeinrichtung nur in der Endstellung vollständig, so dass nur in der Endstellung der Ladevorgang erfolgt.

Es ist mindestens ein erstes Kontaktelement der Ladeeinrichtung gegenüber einem zweiten Kontaktelement der Ladeeinrichtung oder mindestens ein erstes Kontaktelement der elektrischen Versorgungseinheit gegenüber einem zweiten Kontaktelement der elektrischen Versorgungseinheit vorstehend angeordnet. Das erste Kontaktelement und das zweite Kontaktelement der Ladeeinrichtung bzw. der elektrischen Versorgungseinheit sind insbesondere nebeneinander angeordnet, beispielsweise an einer äußeren Seitenfläche der Versorgungseinheit und an einer Seitenfläche einer die Versorgungseinheit aufnehmenden Ausnehmung der Ladeeinrichtung. Die Kontaktelemente können auch an einer Unterseite der elektrischen Versorgungseinheit bzw. einer Oberfläche der Ladeeinrichtung vorgesehen sein. Insbesondere wenn zur Aufnahme der Versorgungseinheit die Ladeeinrichtung eine Ausnehmung an ihrer Oberseite aufweist, können sich die Kontaktelemente in der Bodenfläche der Ausnehmung der Ladeeinrichtung befinden. Unter einer vorstehenden Anordnung wird im Rahmen der vorliegenden Erfindung eine Anordnung verstanden, in der das erste Kontaktelement über das zweite Kontaktelement hinausragt, so dass das erste Kontaktelement und das zweite Kontaktelement z.B. nicht in einer Ebene abschließen. Das erste Kontaktelement kann beispielsweise in der Länge oder der Höhe bzw. Tiefe über das zweite Kontaktelement hinausragen. Die vorstehende Anordnung eines ersten Kontaktelements gegenüber einem zweiten Kontaktelement verhindert, dass in einem Lagezustand, der nicht der Endstellung entspricht, die jeweils zweiten Kontaktelemente einander nicht kontaktieren können, und so der Ladevorgang nicht ablaufen kann.

Insbesondere ist ein erstes Kontaktelement gegenüber einem zweiten Kontaktelement derart vorstehend angeordnet, dass das erste Kontaktelement mit dem zweiten Kontaktelement nicht in einer Ebene abschließt. So kann in einer ersten Ausführungsform das erste Kontaktelement gegenüber dem zweiten Kontaktelement derart vorstehen, dass das erste Kontaktelement das zweite Kontaktelement in der Länge überragt. Sind die beiden Kontaktelemente beispielsweise in einer Seitenfläche angeordnet, so ragt das erste Kontaktelement über das zweite Kontaktelement hinaus. Dies bedeutet, dass das freie Ende des ersten Kontaktelements weiter aus der Seitenfläche herausragt als das freie Ende des zweiten Kontaktelements. Dies kann beispielsweise dadurch erfolgen, dass das erste Kontaktelement länger ausgeführt ist als das zweite Kontaktelement. Alternativ können jedoch auch das erste Kontaktelement und das zweite Kontaktelement im Wesentlichen gleich lang ausgeführt sein. Dabei ist jedoch das erste Kontaktelement an einem Vorsprung in der Seitenwand angebracht, so dass durch den Vorsprung in der Seitenwand das erste Kontaktelement über das zweite Kontaktelement vorsteht.

In einer zweiten, alternativen Ausführungsform kann das erste Kontaktelement gegenüber dem zweiten Kontaktelement auch dadurch vorstehend angeordnet sein, dass das erste Kontaktelement das zweite Kontaktelement in der Höhe überragt. Dies kann wiederum dadurch erfolgen, dass das erste Kontaktelement höher ausgeführt ist als das zweite Kontaktelement. Alternativ können das erste und das zweite Kontaktelement auch im Wesentlichen gleich hoch ausgeführt sein, wobei aber das erste Kontaktelement an einer Erhebung, einem Vorsprung o.dgl. angeordnet ist, so dass mittels der Erhebung das erste Kontaktelement über das zweite Kontaktelement hinausragt. In dieser zweiten Ausführungsform sind die beiden Kontaktelemente beispielsweise in einer Bodenfläche der Ladeeinrichtung bzw. der elektrischen Versorgungseinrichtung angeordnet. Die Kontaktelemente ragen dabei aus der Bodenfläche heraus.

Die Kontaktelemente der Ladeeinrichtung oder der Versorgungseinheit bilden Gegenkontaktelemente zu den Kontaktelementen der jeweils anderen Einrichtung (Ladeeinrichtung oder Versorgungseinheit). In einer einfachen Ausführungsform sind beispielsweise die Kontaktelemente der Versorgungseinheit als Gegenkontaktelemente ausgebildet, die nebeneinander und in einer Ebene, beispielsweise an der Unterseite oder an einer Seitenwand der Versorgungseinheit, angeordnet sind. Unter den Kontaktelementen der Ladeeinrichtung hingegen befindet sich zumindest ein erstes Kontaktelement, das gegenüber einem zweiten Kontaktelement vorsteht. In analoger Weise können auch umgekehrt die Kontaktelemente der Ladeeinrichtung als Gegenkontaktelemente ausgeführt sein, wobei zumindest ein erstes Kontaktelement der Versorgungseinheit gegenüber einem zweiten Kontaktelement der Versorgungseinheit vorsteht.

Unter der Maßgabe, dass nur in der Endstellung alle Kontaktelemente der einen Einrichtung (Ladeeinrichtung oder Versorgungseinheit) alle Kontaktelemente der anderen Einrichtung (Ladeeinrichtung oder Versorgungseinheit) kontaktieren, wobei zumindest ein erstes Kontaktelement einer der beiden Einrichtungen (Ladeeinrichtung oder Versorgungseinheit) gegenüber einem zweiten Kontaktelement vorstehend angeordnet ist, sind beliebige Anordnungen der Kontaktelemente zueinander möglich. So können beispielsweise alternativ zu der vorstehend beschriebenen einfachen Ausführungsform die Gegenkontaktelemente anstatt in einer Ebene angeordnet zu sein, ebenfalls zueinander versetzt, d.h. gegenüber einem benachbarten Kontaktelement vorstehend, angeordnet sein.

Die Kontaktelemente können als Berührkontaktelemente oder als Schleifkontaktelemente ausgeführt sein. Berührkontaktelemente und Schleifkontaktelemente sind an sich aus dem Stand der Technik bekannt. Weiterhin können die Kontaktelemente federnd ausgeführt sein, vorzugsweise ist mindestens ein Kontaktelement federnd ausgeführt. Federnde Kontaktelemente (Kontaktfedern) sind ebenfalls an sich aus dem Stand der Technik bekannt.

Vorzugsweise ist mindestens ein erstes Kontaktelement, welches gegenüber einem zweiten Kontaktelement vorstehend angeordnet ist, als federndes Kontaktelement ausgeführt. Dabei ist es unerheblich, ob das federnd ausgeführte erste Kontaktelement ein erstes Kontaktelement der Versorgungseinrichtung oder ein erstes Kontaktelement der Ladeeinrichtung ist. Das erste, als Federkontaktelement ausgeführte Kontaktelement und ggf. weitere federnde Kontaktelemente können entweder in der Ladeeinrichtung oder in der Versorgungseinheit angeordnet sein.

Die Federung zumindest eines ersten Kontaktelements ist so ausgelegt, dass nur in der Endstellung auch die jeweils zweiten Kontaktelemente der Versorgungseinheit und der Ladeeinrichtung einander kontaktieren. Dies bedeutet, dass in der Endstellung die Federung des ersten Kontaktelements so stark beansprucht ist, dass auch die beiden zweiten Kontaktelemente miteinander in Kontakt sind.

Wird die Versorgungseinheit z.B. unsachgemäß, d.h. nicht in der Endstellung, in der Ladeeinrichtung abgestellt bzw. abgelegt, so kann es sein, dass die jeweils ersten Kontaktelemente der Ladeeinrichtung und der Versorgungseinheit trotzdem einander kontaktieren, obwohl die Endstellung noch nicht erreicht ist. Da aber zumindest ein erstes Kontaktelement gegenüber einem zweiten Kontaktelement vorstehend angeordnet ist, kommt in diesem unsachgemäßen Lagezustand noch kein Kontakt zwischen den beiden zweiten Kontaktelementen zustande. Daher kann in diesem Lagezustand kein Ladevorgang erfolgen. Erst nach Erreichen der Endstellung kontaktieren auch die beiden zweiten Kontaktelemente einander, da in dieser Endstellung die Feder des zumindest einen federnd ausgeführten ersten Kontaktelements so stark beansprucht ist, dass der Abstand zwischen dem ersten, gegenüber dem zweiten Kontaktelement vorstehend angeordneten Kontaktelement und dem zweiten Kontaktelement soweit ausgeglichen bzw. aufgehoben ist, dass die jeweils zweiten Kontaktelemente der Ladeeinrichtung und der Versorgungseinheit einander kontaktieren.

Erfindungsgemäß sind mindestens zwei Kontaktelemente in der Ladeeinrichtung und mindestens zwei Kontaktelemente in der Versorgungseinheit vorgesehen. Es können jedoch auch jeweils drei oder vier oder mehrere Kontaktelemente in der Ladeeinrichtung und der Versorgungseinheit vorgesehen sein. Sind jeweils nur zwei Kontaktelemente vorgesehen, so dienen sie als Kontaktelemente zur Spannungsversorgung. Sind in der Ladeeinrichtung und der Versorgungseinrichtung jeweils mehr als zwei, z.B. drei oder vier, Kontaktelemente vorgesehen, so dienen die weiteren Kontaktelemente der Datenübertragung. Die Kontaktelemente können dabei gleich oder verschieden ausgeführt sein. Sie sind jeweils entsprechend ihrer Funktion, d.h. Spannungsversorgung oder Datenaustausch, verschaltet.

Das erste und zweite Kontaktelement der Ladeeinrichtung bzw. der elektrischen Versorgungseinrichtung können beispielsweise zwei Kontaktelemente zur Spannungsversorgung sein. Sind mehr als zwei Kontaktelemente in der Ladeeinrichtung und der Versorgungseinheit vorgesehen, kann das erste Kontaktelement und/oder das zweite Kontaktelement auch ein Kontaktelement zur Datenübertragung sein. Demnach können das erste Kontaktelement, welches über das zweite Kontaktelement vorstehend angeordnet ist, und das zweite Kontaktelement eine beliebige Kombination von Funktionen übernehmen, d.h. beide Kontaktelemente können entweder der Spannungsversorgung oder der Datenübertragung dienen oder eines der beiden Kontaktelemente dient der Spannungsübertragung und eines dem Datenaustausch.

Sind in der Ladeeinrichtung und der Versorgungseinheit jeweils mehr als zwei Kontaktelemente vorgesehen, so kann auch mehr als ein Kontaktelement über ein zweites Kontaktelement vorstehend angeordnet sein. Sind beispielsweise jeweils drei bzw. vier Kontaktelemente vorgesehen, so können zwei der drei bzw. vier Kontaktelemente über eines bzw. zwei der drei bzw. vier Kontaktelemente vorstehen.

Zusätzlich können in der erfindungsgemäßen Anordnung zur elektrischen Kopplung der Ladeeinrichtung und der Versorgungseinheit auch mechanische Kopplungselemente und/oder Führungselemente vorgesehen sein, die bewirken, dass die Versorgungseinheit einfach und sicher in die Endstellung gebracht und dort gehalten werden kann. Die mechanischen Kopplungselemente und/oder Führungselemente sind an der Ladeeinrichtung einerseits und der Versorgungseinheit andererseits angeordnet. Sie greifen ineinander und bilden so einen Formschluss zwischen der Versorgungseinheit und der Ladeeinrichtung. Die mechanischen Kopplungsmittel können z.B. ein Vorsprung in der Ladeeinrichtung und eine Ausnehmung in der Versorgungseinheit sein, wobei der Vorsprung in die Ausnehmung eingreift und einen Formschluss bildet.

Die elektrische Versorgungseinheit der erfindungsgemäßen Anordnung zur elektrischen Kopplung enthält zumindest einen aufladbaren Akku. Es kann sich dabei um einen Akkupack handeln, der lösbar mit einem Elektrogerät, insbesondere einer Handwerkzeugmaschine, z.B. Bohrhammer, Bohrschrauber, Schrauber, verbindbar ist. Es ist vorgesehen, entweder die elektrische Versorgungseinheit alleine, d.h. ohne Elektrogerät, oder zusammen mit dem Elektrogerät in der Ladeeinrichtung anzuordnen, um den Ladevorgang auszuführen. Alternativ kann die elektrische Versorgungseinheit, enthaltend mindestens einen aufladbaren Akku, auch in das Gehäuse des Elektrogeräts, insbesondere der Handwerkzeugmaschine, integriert sein. In dieser Ausführungsform wird das Elektrogerät mit integrierter Versorgungseinheit in der Ladeeinrichtung abgestellt, abgelegt o.dgl., um das Laden des Akkus vorzunehmen. Demnach ist das Gehäuse, in dem die elektrische Versorgungseinheit angeordnet ist, entweder ein separates Gehäuse zur Aufnahme des mindestens einen aufladbaren Akkus oder es handelt sich dabei um das Gehäuse eines Elektrogerätes, in dem der aufladbare Akku integriert ist.

Zur mechanischen Kopplung der elektrischen Versorgungseinheit mit der Ladeeinrichtung (auch als Ladegerät bezeichnet) weist die Versorgungseinheit mindestens ein Führungselement auf, welches vorzugsweise im vorderen Bereich des Gehäuses angeordnet ist. Bevorzugt handelt es sich bei dem Führungselement um zumindest eine Führungsleiste. Das mindestens eine Führungselement greift in eine an dem Ladegerät angeordnete korrespondierende Aufnahmevorrichtung ein, wobei die Kombination des mindestens einen Führungselements und der Aufnahmevorrichtung als Drehgelenk oder als Schiebehintergriffsitz wirkt. Die mechanische Koppelanordnung verleiht dem über die Versorgungseinheit mit dem Ladegerät gekoppelten Elektrogerät in vorteilhafter Weise eine größere Standsicherheit sowie einen wesentlich besseren Halt auf dem Ladegerät, bei gleichzeitig einfacher Handhabung. Durch eine Führungsleiste im vorderen Bereich des Gehäuses der Versorgungseinheit wird die Versorgungseinheit auf dem Ladegerät zentriert, wobei die Führungsleiste als Teil des Drehgelenks einen Teil der wirkenden Kräfte aufnimmt. Zudem verhindert eine Führungsleiste in vorteilhafter Weise ein seitliches Kippen der Versorgungseinheit und ein Kippen nach hinten.

Vorteilhafterweise wird das Gehäuse, in dem die Versorgungseinheit aufgenommen ist, in einer Endstellung, also im gekoppelten Zustand, durch eine Feder mit einer Federanpresskraft gehalten. Vorteilhafterweise ist die die Federanpresskraft aufbringende Feder derart weit auslenkbar ausgebildet, dass die Führungsleiste aufgrund eines Kraftimpulses, zum Beispiel wenn das Ladegerät mitsamt der elektrischen Versorgungseinheit fällt und auf einem harten Untergrund aufprallt, aus der Aufnahmevorrichtung austritt und das Gehäuse der Versorgungseinheit sich von dem Ladegerät lösen kann, sodass keine Schäden an dem Gehäuse oder dem Ladegerät aufgrund einer festen Verbindung/Kopplung entstehen.

Vorteilhafterweise ist die die Federanpresskraft aufbringende Feder zur elektrischen Kontaktierung der Versorgungseinheit mit dem Ladegerät als elektrische Kontaktfeder ausgebildet.

Besonders vorteilhaft ist, dass die mindestens eine Führungsleiste und die korrespondierende Aufnahmevorrichtung so ausgeführt sind, dass das Drehgelenk eine Schwenkbewegung von einer Ausgangsstellung nach unten in eine Endstellung und von der Endstellung nach oben in die Ausgangsstellung ermöglicht. Dies ermöglicht eine einfache Handhabung bei der Kopplung der elektrischen Versorgungseinheit mit dem Ladegerät. Vor der Kopplung mit dem Ladegerät kann die elektrische Versorgungseinheit, in Abhängigkeit von der Ausführungsform der Versorgungseinheit und/oder der Anordnung der elektrischen Kontakte zur elektrischen Verbindung der Versorgungseinheit mit dem Ladegerät, vom Elektrogerät getrennt werden oder mit dem Elektrogerät verbunden bleiben.

Die mechanische Kopplung der elektrischen Versorgungseinheit mit dem Ladegerät erfolgt durch Einschieben der mindestens einen Führungsleiste der elektrischen Versorgungseinheit in die korrespondierende Aufnahmevorrichtung des Ladegerätes in die Ausgangsstellung und einer anschließenden Schwenkbewegung der Versorgungseinheit von der Ausgangsstellung nach unten in die Endstellung.

Die Endstellung ist beispielsweise erreicht, wenn ein Gehäuseboden der Versorgungseinheit auf eine Oberfläche einer Aufnahmevertiefung (Ausnehmung) im Ladegerät trifft. Vergleichbar mit einer Skibindung ist die elektrische Versorgungseinheit durch eine Federanpresskraft in der Endstellung gehalten. Die Federanpresskraft wird beispielsweise von einer elektrischen Kontaktfeder erzeugt, auf welche ein am Gehäuse der elektrischen Versorgungseinheit angeordnetes Betätigungselement wirkt. Zudem besteht in der Endstellung ein elektrischer Kontakt zwischen der elektrischen Versorgungseinheit und dem Ladegerät, so dass der mindestens eine Akku der elektrischen Versorgungseinheit aufgeladen wird.

Nachfolgend wird die Erfindung anhand der beigefügten Zeichnungen näher erläutert. Es zeigen
- Figur 1: ein schematisches Blockdiagramm einer Anordnung zur Kopplung einer elektrischen Versorgungseinrichtung mit einem Ladegerät mittels eines Drehgelenks
- Figur 1a: a eine ausschnittsweise Vergrößerung der mechanischen Kopplungsanordnung nach Figur 1
- Figur 2: eine perspektivische Darstellung einer von einem Elektrogerät getrennten elektrischen Versorgungseinheit
- Figur 3: eine schematische Darstellung einer Anordnung zur Kopplung einer elektrischen Versorgungseinrichtung mit einem Ladegerät mittels eines Schiebehintergriffsitzes
- Figur 4: die Anordnung aus Figur 3 in einem entkoppelten Zustand
- Figur 5: eine Draufsicht auf die Ladeeinrichtung mit Kontaktelementen
- Figur 5a: eine ausschnittsweise Vergrößerung der Ladeeinrichtung nach Figur 5 im Bereich der Kontaktelemente.

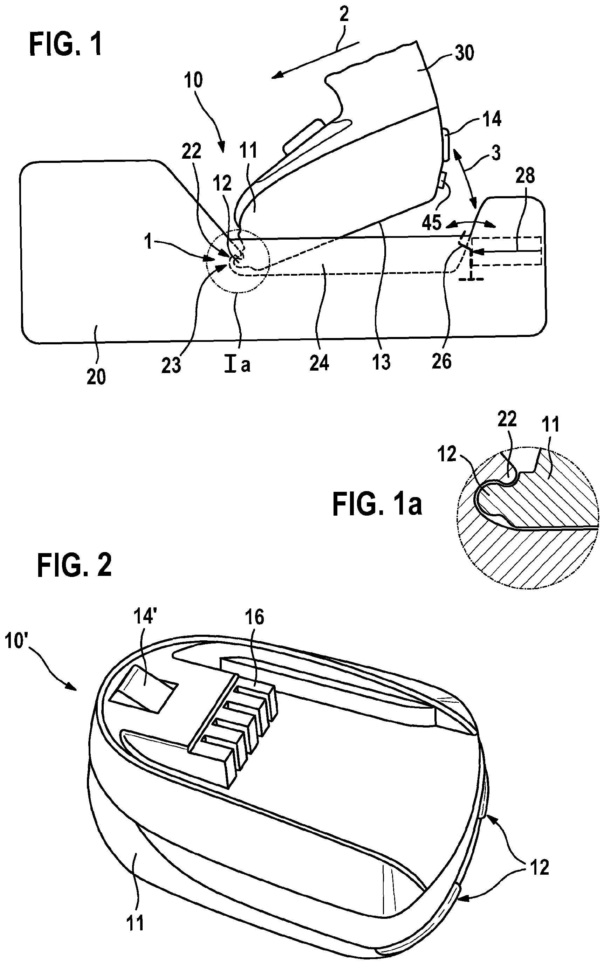

Wie aus Figur 1 und 2 ersichtlich ist, umfasst eine erfindungsgemäße elektrische Versorgungseinheit 10, 10' für netzunabhängig zu versorgende Elektrogeräte 30 zur mechanischen Kopplung mit einem Ladegerät 20, ein Gehäuse 11, welches im vorderen Bereich mindestens eine Führungsleiste 12 und im hinteren Bereich ein Betätigungselement 14, 14' aufweist.

Wie weiter aus Figur 1 ersichtlich ist, ist die elektrische Versorgungseinheit 10 während der mechanischen Kopplung mit dem Ladegerät 20 mit einem Elektrogerät 30 verbunden, welches in Figur 1 nur andeutungsweise dargestellt ist, d.h. die elektrische Versorgungseinheit 10 kann beispielsweise fest in das Elektrogerät 30 integriert sein. Die elektrische Versorgungseinheit 10, 10' kann für mobile tragbare Geräte wie beispielsweise Elektrowerkzeuge in Form von Handbohrmaschinen, Handschraubern, Gartengeräte usw. verwendet werden.

Figur 2 zeigt eine vom Elektrogerät 30 getrennte Versorgungseinheit 10' mit zwei im vorderen Bereich angeordneten Führungsleisten 12, einem im hinteren Bereich der Versorgungseinheit 10' angeordneten Betätigungselement 14' und elektrischen Anschlüssen 16, über welche die Versorgungseinheit 10' während eines Ladevorgangs mit dem Ladegerät 20 elektrisch kontaktiert werden kann. Zum netzunabhängigen Betrieb kann das zugehörige Elektrogerät 30 über die elektrischen Anschlüsse 16 mit der Versorgungseinheit 10' elektrisch verbunden werden.

Wie weiter aus Figur 1 ersichtlich ist, umfasst ein erfindungsgemäßes Ladegerät 20 zur mechanischen Kopplung mit der elektrischen Versorgungseinheit 10, 10' eine Aufnahmevertiefung 24, an deren einem Ende eine Aufnahmevorrichtung 22 angeordnet ist, in welche die mindestens eine Führungsleiste 12 der elektrischen Vorsorgungseinheit 10, 10' zur mechanischen Kopplung eingreift. Am entgegen gesetzten Ende der Aufnahmevorrichtung 22 ist eine Feder 26 angeordnet, welche beispielsweise als elektrische Kontaktfeder ausgeführt ist. Das im hinteren Bereich der elektrischen Versorgungseinheit 10, 10' angeordnete Betätigungselement 14, 14' wirkt so auf die Feder 26 ein, dass die elektrische Versorgungseinheit 10, 10' über die Federanpresskraft 28 der Feder 26 in einer Endstellung im Ladegerät 20 gehalten wird.

Wie weiter aus Figur 1 ersichtlich ist, umfasst die erfindungsgemäße Anordnung 1 zur mechanischen Kopplung die im vorderen Bereich des Gehäuses 11 der elektrischen Versorgungseinheit 10, 10' angeordnete mindestens eine Führungsleiste 12 und die eine am Ladegerät 20 angeordnete korrespondierende Aufnahmevorrichtung 22. Zur mechanischen Kopplung der elektrischen Versorgungseinheit 10, 10' mit dem Ladegerät 20 greift die Führungsleiste 12 in die korrespondierende Aufnahmevorrichtung 22 ein, wobei die Kombination der mindestens einen Führungsleiste 12 und der Aufnahmevorrichtung 22 als Drehgelenk 23 wirkt. Das Drehgelenk 23 ermöglicht eine Schwenkbewegung von einer Ausgangsstellung nach unten in eine Endstellung und von der Endstellung nach oben in die Ausgangsstellung. Die beiden Richtungen der möglichen Schwenkbewegungen sind in Figur 1 als Doppelpfeil 3 dargestellt.

Zur mechanischen Kopplung der elektrischen Versorgungseinheit 10, 10' mit dem Ladegerät 20 wird die mindestens eine Führungsleiste 12 durch eine entsprechende Schiebebewegung in Richtung des Pfeils 2 in die korrespondierende Aufnahmevorrichtung 22 eingeschoben, so dass sich die in Figuren 1 dargestellte Ausgangsstellung ergibt. Anschließend wird durch die vom Drehgelenk 23 vorgegebene Schwenkbewegung, die Versorgungseinheit 10, 10' nach unten in die Endstellung gedrückt. Die Endstellung ist erreicht, wenn ein Gehäuseboden 13 der Versorgungseinheit 10 auf eine Oberfläche der Aufnahmevertiefung 24 im Ladegerät 20 auftrifft. Durch die Federanpresskraft 28 der Feder 26 wird die elektrische Versorgungseinheit 10, 10' in der Endstellung gehalten. In der Endstellung besteht zwischen der elektrischen Versorgungseinheit 10, 10' und dem Ladegerät 20 über die Feder 26, welche gleichzeitig als elektrische Kontaktfeder wirkt, ein elektrischer Kontakt, so dass die nicht dargestellten Batterien der elektrischen Versorgungseinheit 10, 10' aufgeladen werden können.

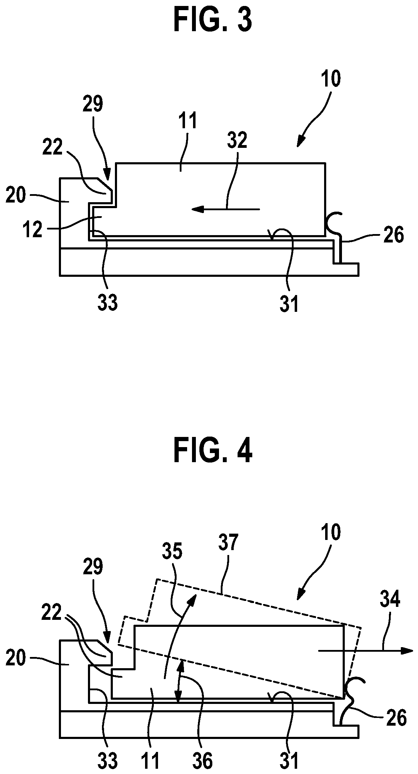

Die Figur 3 zeigt eine schematische Darstellung einer Anordnung zur Kopplung einer elektrischen Versorgungseinrichtung mit einem Ladegerät mittels eines Schiebehintergriffsitzes 29. Die Elemente beziehungsweise Bauteile, die Elementen beziehungsweise Bauteilen der vorhergehenden Figuren entsprechen, sind mit den gleichen Bezugszeichen versehen. Gezeigt ist die Versorgungseinheit 10 aus der Figur 1, die im vorderen Bereich die Führungsleiste 12 aufweist, die in die Aufnahmevorrichtung 22 des Ladegeräts 20 eingreift, wobei die Führungsleiste 12 und die Aufnahmevorrichtung 22 so gestaltet sind, dass die Führungsleiste 12 in die Aufnahmevorrichtung 22 nur geschoben werden kann. Dazu wird die Versorgungseinheit 10 beziehungsweise ihr Gehäuse 11 auf eine Oberfläche 31 des Ladegeräts 20 gesetzt und dann auf der Ebene 31 so in Richtung des Pfeils 32 geschoben, dass die Führungsleiste 12 in die Aufnahmevorrichtung 22 geschoben wird. Die Aufnahmevorrichtung 22 weist dabei eine rechteckförmige Aussparung 33 auf, welche die ebenfalls rechteckförmige Führungsleiste 12 aufnimmt. Die Maße der Aussparung 33 und der Führungsleiste 12 sind dabei so gewählt, dass eine Verkopplung des Gehäuses 11 und des Ladegeräts 20 nur durch Schieben des Gehäuses 11 in Richtung des Pfeils 32 realisiert oder entgegen der Richtung des Pfeils 32 gelöst werden kann. Es ist bei dieser Ausführungsform also nicht möglich, das Gehäuse 11 beziehungsweise die Versorgungseinheit 10 durch eine Schwenkbewegung zu koppeln oder zu entkoppeln. An dem entgegengesetzten Ende der Aufnahmevorrichtung 22 des Ladegeräts 20 ist die Feder 26 angeordnet, welche beispielsweise als elektrische Kontaktfeder ausgeführt ist. Die Feder 26 wirkt so auf das Gehäuse 11 der elektrischen Versorgungseinheit 10, dass das Gehäuse 11 mit der Führungsleiste 12 in der Aussparung 33 und damit an dem Ladegerät 20 gehalten wird.

In Figur 4 ist schematisch die Anordnung aus Figur 3 dargestellt, wobei sich die Anordnung in einem Zustand befindet, der das Lösen des Gehäuses 11 von dem Ladegerät 20 ermöglicht. Dazu wird das Gehäuse 11 in Richtung des Pfeils 34 gegen die Feder 26 geschoben, sodass sich die Führungsleiste 12 des Gehäuses 11 aus der Aussparung 33 der Aufnahmevorrichtung 22 bewegt, wobei die Feder 26 ausgelenkt wird. Ist die Führungsleiste 12 aus der Aussparung 33 herausbewegt, so kann das Gehäuse 11 in Richtung des Pfeils 35 geschwenkt werden, um die elektrische Versorgungseinheit 10 von dem Ladegerät 20 zu entfernen.

Zum Einsetzen des Gehäuses 11 in das Ladegerät 20 wird das Gehäuse 11 zunächst mit seinem hinteren Bereich in einem Winkel 36 auf die Oberfläche 31 des Ladegeräts 20 gesetzt, dargestellt durch einen gestrichelten Umriss 37 des Gehäuses 11, sodass die Feder 26 ausgelenkt wird. Anschließend wird das Gehäuse 11 vollständig auf die Oberfläche 31 des Ladegeräts 20 gekippt, sodass die Führungsleiste 12 in die Aussparung 33 der Aufnahmevorrichtung 22 geschoben werden kann.

Der Schiebehintergriffsitz 29, das Drehgelenkt 23 und die Feder 26 sind so gestaltet, dass sich der Schiebehintergriffsitz 29 und das Drehgelenk 23 selbsttätig lösen können. Dazu ist die Form und Kraft der Feder 26 so gewählt, dass sich das Gehäuse 11, wenn das Ladegerät mitsamt dem Gehäuse 11 einen kritischen Kraftimpuls erfährt, zum Beispiel durch Fallen auf einen festen Untergrund, aus dem Schiebehintergriffsitz beziehungsweise dem Drehgelenk selbstständig lösen kann. Dazu ist die Federanpresskraft 28 der Feder 26 so gewählt, dass die Feder 26 erst ab einem kritischen Kraftimpuls, der natürlich auch gewollt durch Bewegen des Gehäuses aufgebracht werden kann, ausgelenkt werden kann, sodass sich das Gehäuse 11 von dem Ladegerät lösen kann, wobei die Feder 26 so weit auslenkbar ist, dass die Führungsleiste 12 aus der Aufnahmevorrichtung 22 austreten kann.

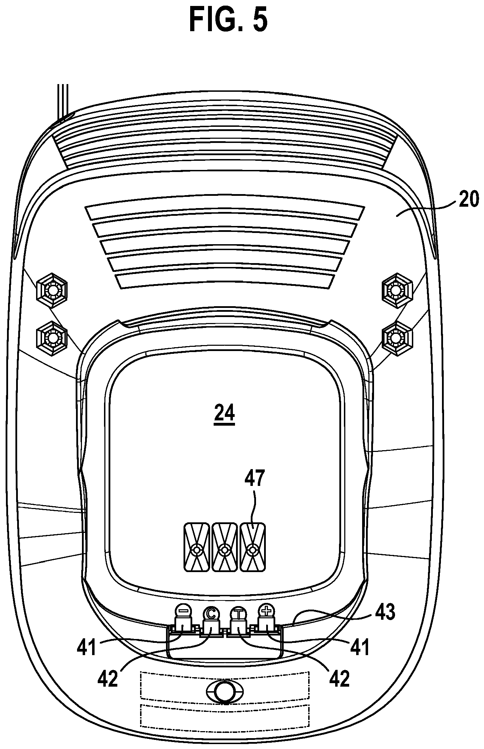

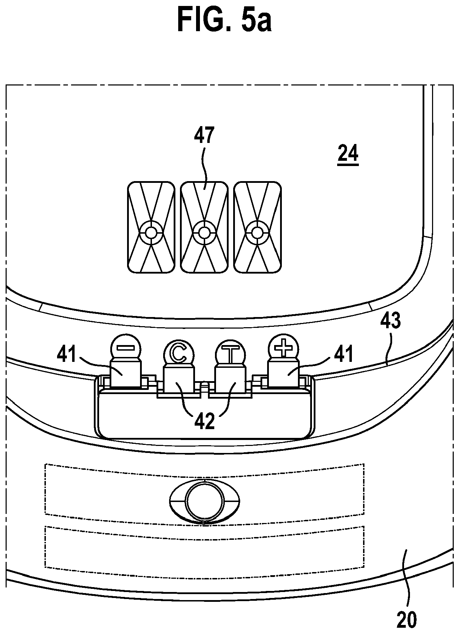

In der Draufsicht auf eine bevorzugte Ausführungsform einer Ladeeinrichtung 20 gemäß Fig. 5 ist die Aufnahmevertiefung 24 zu Aufnahme der Versorgungseinheit 10 erkennbar sowie die zur elektrischen Kopplung der Ladeeinrichtung 20 mit der Versorgungseinheit 10 vorgesehenen Kontaktelemente 41, 42. In der dargestellten Ausführungsform sind vier Kontaktelemente 41, 42 in der Ladeeinrichtung 20 vorgesehen. Dementsprechend weist auch die Versorgungseinheit 10 vier Kontaktelemente 45 auf, die als Gegenkontaktelemente dienen. Zwei Kontaktelemente 41 dienen der Spannungsversorgung, zwei Kontaktelemente 42 dienen der Datenübertragung. Die Kontaktelemente 41, 42 sind nebeneinander angeordnet, wobei deren Anordnung prinzipiell in beliebiger Reihenfolge erfolgen kann. Erfindungsgemäß wirken die Kontaktelemente 41, 42 der Ladeeinrichtung und die Kontaktelemente 45 der Versorgungseinheit derart zusammen, dass der Ladevorgang nur in der definierten Endstellung der elektrischen Versorgungseinheit 10 in der Ladeeinrichtung 20 erfolgt. Dies ist möglich, da ein erstes Kontaktelement 41 der Ladeeinrichtung 20 gegenüber einem zweiten Kontaktelement 42 der Ladeeinrichtung 20 vorstehend angeordnet ist. Die vorstehende Anordnung ist insbesondere in der Vergrößerung nach Fig. 5a deutlich erkennbar. Die Kontaktelemente 41, 42 sind im Bereich der Aufnahmevertiefung 24 im Bereich der Seitenwand 43 angeordnet. In der dargestellten Ausführungsform stehen die beiden Kontaktelemente 41 zur Spannungsversorgung weiter aus der Seitenwand 43 hervor als die beiden Kontaktelemente 42 zur Datenübertragung. Damit steht ein erstes Kontaktelement 41 gegenüber einem zweiten Kontaktelement 42 vor. Zumindest die vorstehenden, ersten Kontaktelemente 41 sind als Federkontaktelemente ausgeführt. In der Endstellung der Versorgungseinheit 10 in der Ladeeinrichtung 20 werden die ersten Kontaktelemente 41 durch die entsprechenden ersten Gegenkontaktelemente 45 der Versorgungseinheit so stark angepresst, d.h. in Richtung zur Seitenwand hin, dass auch die zurückgesetzten zweiten Kontaktelemente 42 durch die entsprechenden zweiten Gegenkontaktelemente 45 der Versorgungseinheit kontaktiert werden. Die relative Positionierung und/oder die Federkraft der federnden Kontaktelemente 41 ist so gewählt, dass nur in der Endstellung alle vier Kontaktelemente 41, 42 mit den jeweiligen Gegenkontaktelementen 45 der Versorgungseinheit in Kontakt stehen. Erst nach Erreichen der Endstellung kontaktieren auch die beiden zweiten Kontaktelemente 42, 45 einander, da in dieser Endstellung das federnde erste Kontaktelement 41 so stark beansprucht ist, dass der Abstand zwischen dem ersten, gegenüber dem zweiten Kontaktelement 42 vorstehend angeordneten Kontaktelement 41 und dem zweiten Kontaktelement 42 soweit ausgeglichen bzw. aufgehoben ist, dass die jeweils zweiten Kontaktelemente 42, 45 der Ladeeinrichtung 20 und der Versorgungseinheit 10 einander kontaktieren.

Weiterhin sind in Fig. 5 bzw. 5a zusätzliche mechanische Kopplungselemente und/oder Führungselemente 47 dargestellt, die bewirken, dass die Versorgungseinheit 10 einfach und sicher in die Endstellung gebracht und dort gehalten werden kann. Die mechanischen Kopplungselemente und/oder Führungselemente sind in der dargestellten Ausführungsform im Bereich der Aufnahmevertiefung 24 vorgesehen und sind in Form von Vorsprüngen, insbesondere pyramidenförmigen Vorsprüngen, ausgebildet. Sie greifen in nicht dargestellte Ausnehmungen im Gehäuseboden 13 und bilden so einen Formschluss zwischen der Versorgungseinheit 10 und der Ladeeinrichtung 20.

## Patentansprüche

1. Anordnung zur elektrischen Kopplung einer elektrischen Versorgungseinheit (10), insbesondere für netzunabhängig zu versorgende Elektrogeräte (30), insbesondere Handwerkzeugmaschinen, mit einer Ladeeinrichtung (20), wobei die elektrische Versorgungseinheit (10) in einem Gehäuse (11) angeordnet ist, in welchem mindestens ein durch die Ladeeinrichtung (20) aufladbarer Akku angeordnet ist, und die elektrische Versorgungseinheit (10) sowie die Ladeeinrichtung (20) jeweils mindestens ein erstes und zweites Kontaktelement (41, 42, 45) aufweisen, wobei das erste und zweite Kontaktelement (45) der elektrischen Versorgungseinheit (10) mit dem ersten und zweiten Kontaktelement (41, 42) der Ladeeinrichtung (20) derart zusammenwirken, dass der Ladevorgang nur in einer definierten Endstellung der elektrischen Versorgungseinheit (10) in der Ladeeinrichtung (20) erfolgt, **dadurch gekennzeichnet, dass** mindestens ein erstes Kontaktelement (41) der Ladeeinrichtung (20) gegenüber einem zweiten Kontaktelement (42) der Ladeeinrichtung (20) oder mindestens ein erstes Kontaktelement (45) der elektrischen Versorgungseinheit (10) gegenüber einem zweiten Kontaktelement (45) der elektrischen Versorgungseinheit (10) vorstehend angeordnet ist, wobei zumindest das eine erste Kontaktelement (41) der Ladeeinrichtung (20) oder der Versorgungseinrichtung (10), welches gegenüber dem zweiten Kontaktelement (42) der Ladeeinrichtung (20) oder der Versorgungseinrichtung (10) vorstehend angeordnet ist, eine Federung aufweist, die so ausgelegt ist, dass nur in der Endstellung die jeweils zweiten Kontaktelemente (45) der Versorgungseinheit (10) und der Ladeeinrichtung (20) einander kontaktieren.

2. Anordnung nach Anspruch 1, **dadurch gekennzeichnet, dass** das erste und zweite Kontaktelement (45) der elektrischen Versorgungseinrichtung (10) nur in der Endstellung das erste und zweite Kontaktelement (41, 42) der Ladeeinrichtung (20) vollständig kontaktieren.

3. Anordnung nach einem der vorhergehenden Ansprüche, **dadurch gekennzeichnet, dass** mindestens ein Kontaktelement (41, 45) der Ladeeinrichtung (20) oder der elektrischen Versorgungseinrichtung (10) ein federndes Kontaktelement (41) ist.

4. Elektrogerät, insbesondere Handwerkzeugmaschine, enthaltend eine Anordnung zur elektrischen Kopplung einer elektrischen Versorgungseinheit (10) mit einer Ladeeinrichtung (20) nach einem der vorhergehenden Ansprüche.

5. Elektrische Versorgungseinheit, enthaltend eine Anordnung zur elektrischen Kopplung einer elektrischen Versorgungseinheit (10) mit einer Ladeeinrichtung (20) nach einem der Ansprüche 1-3.

6. Ladeeinrichtung, enthaltend eine Anordnung zur elektrischen Kopplung einer elektrischen Versorgungseinheit (10) mit der Ladeeinrichtung (20) nach einem der Ansprüche 1-3.

## Claims

1. Arrangement for electrically coupling an electrical power supply unit (10), in particular for electrical devices (30) which are to be supplied with power independently of the mains, in particular handheld power tools, comprising a charging device (20), wherein the electrical power supply unit (10) is arranged in a housing (11) in which at least one rechargeable battery, which can be charged by the charging device (20), is arranged, and the electrical power supply unit (10) and the charging device (20) each have at least one first and one second contact element (41, 42, 45), wherein the first and the second contact element (45) of the electrical power supply unit (10) interact with the first and the second contact element (41, 42) of the charging device (20) in such a way that the charging process takes place only in a defined end position of the electrical power supply unit (10) in the charging device (20), **characterized in that** at least one first contact element (41) of the charging device (20) is arranged such that it protrudes in relation to a second contact element (42) of the charging device (20) or at least one first contact element (45) of the electrical power supply unit (10) is arranged such that it protrudes in relation to a second contact element (45) of the electrical power supply unit (10), wherein at least the one first contact element (41) of the charging device (20) or of the power supply device (10) which is arranged such that it protrudes in relation to the second contact element (42) of the charging device (20) or of the power supply device (10) has a spring arrangement which is designed such that the respectively second contact elements (45) of the power supply unit (10) and the charging device (20) make contact with one another only in the end position.

2. Arrangement according to Claim 1, **characterized in that** the first and the second contact element (45) of the electrical power supply device (10) make full contact with the first and the second contact element (41, 42) of the charging device (20) only in the end position.

3. Arrangement according to one of the preceding claims, **characterized in that** at least one contact element (41, 45) of the charging device (20) or of the electrical power supply device (10) is a spring-action contact element (41).

4. Electrical device, in particular handheld power tool, containing an arrangement for electrically coupling an electrical power supply unit (10) to a charging device (20) according to one of the preceding claims.

5. Electrical power supply unit, containing an arrangement for electrically coupling an electrical power supply unit (10) to a charging device (20) according to one of Claims 1-3.

6. Charging device, containing an arrangement for electrically coupling an electrical power supply unit (10) to the charging device (20) according to one of Claims 1-3.

## Revendications

1. Arrangement de connexion électrique d'une unité d'alimentation électrique (10), notamment pour des appareils électriques (30) à alimenter indépendamment du réseau, plus particulièrement des outils électroportatifs, avec un dispositif de charge (20), l'unité d'alimentation électrique (10) étant disposée dans un boîtier (11) dans lequel est disposé au moins un accumulateur qui peut être chargé par le dispositif de charge (20), et l'unité d'alimentation électrique (10) ainsi que le dispositif de charge (20) possèdent respectivement au moins un premier et un deuxième élément de contact (41, 42, 45), les premier et deuxième éléments de contact (45) de l'unité d'alimentation électrique (10) coopérant avec les premier et deuxième éléments de contact (41, 42) du dispositif de charge (20) de telle sorte que l'opération de charge n'a lieu que dans une position finale définie de l'unité d'alimentation électrique (10) dans le dispositif de charge (20), **caractérisé en ce qu'**au moins un premier élément de contact (41) du dispositif de charge (20) est disposé en saillie par rapport à un deuxième élément de contact (42) du dispositif de charge (20) ou au moins un premier élément de contact (45) de l'unité d'alimentation électrique (10) est disposé en saillie par rapport à un deuxième élément de contact (45) de l'unité d'alimentation électrique (10), au moins ledit premier élément de contact (41) du dispositif de charge (20) ou du dispositif d'alimentation (10) qui est disposé en saillie par rapport au deuxième élément de contact (42) du dispositif de charge (20) ou du dispositif d'alimentation (10) possédant une suspension à ressort qui est conçue de telle sorte que les deuxièmes éléments de contact (45) respectifs de l'unité d'alimentation (10) et du dispositif de charge (20) n'entrent mutuellement en contact que dans la position finale.

2. Arrangement selon la revendication 1, **caractérisé en ce que** les premier et deuxième éléments de contact (45) de l'unité d'alimentation électrique (10) n'entrent entièrement en contact avec les premier et deuxième éléments de contact (41, 42) du dispositif de charge (20) que dans la position finale.

3. Arrangement selon l'une des revendications précédentes, **caractérisé en ce qu'**au moins un élément de contact (41, 45) du dispositif de charge (20) ou de l'unité d'alimentation électrique (10) est un élément de contact (41) monté sur ressort.

4. Appareil électrique, notamment outil électroportatif, contenant un arrangement de connexion électrique d'une unité d'alimentation électrique (10) avec un dispositif de charge (20) selon l'une des revendications précédentes.

5. Unité d'alimentation électrique, contenant un arrangement de connexion électrique d'une unité d'alimentation électrique (10) avec un dispositif de charge (20) selon l'une des revendications 1 à 3.

6. Dispositif de charge, contenant un arrangement de connexion électrique d'une unité d'alimentation électrique (10) avec un dispositif de charge (20) selon l'une des revendications 1 à 3.
